# EUROPEAN PATENT SPECIFICATION

(11) **EP 3 632 831 B1**
(45) Date of publication and mention of the grant of the patent: **14.08.2024**
(21) Application number: 18198433.7
(22) Date of filing: 03.10.2018
(51) Int. Cl.: B66B 5/00, B66B 5/02, B66B 11/04

(54) **MOVABLE MAINTENANCE ROBOT SYSTEM, METHOD FOR PROVIDING MAINTENANCE TO AN ELEVATOR CAR OF AN ELEVATOR AND ELEVATOR**
BEWEGLICHES WARTUNGSROBOTERSYSTEM, VERFAHREN ZUR BEREITSTELLUNG VON WARTUNG AN EINER AUFZUGSKABINE EINES AUFZUGS UND AUFZUG
SYSTÈME DE ROBOT DE MAINTENANCE MOBILE, PROCÉDÉ DESTINÉ À LA MAINTENANCE D'UNE CABINE D'ASCENSEUR D'UN ASCENSEUR ET ASCENSEUR

(43) Date of publication of application: 08.04.2020
(73) Proprietor: KONE Corporation, 00330 Helsinki (FI)
(72) Inventor: LÄHTEENMÄKI, Jussi, 00330 HELSINKI (FI)
(74) Representative: Berggren Oy

(56) References cited:
- DE-A1- 102016 205 236
- US-A1- 2017 029 245

## Description

### TECHNICAL FIELD

The invention concerns in general the technical field of elevators. The invention concerns especially, however, not exclusively, providing maintenance to an elevator car.

### BACKGROUND

In elevators, especially in which more than one elevator car is operating in a same elevator shaft or hoistway, a defective car may obstruct the operation of the elevator completely, because the rest of the cars, if any, are unable to move past the defective car. The defective car may stop between landing floors and, therefore, entrapping passengers inside the car, for instance. To correct this situation, it has been suggested in earlier attempts to drive a manned recovery car next to the defective car. The recovery car is configured such that maintenance personnel can make required actions therefrom to repair the defective car or tow it away or to rescue the passengers.

The problem with the proposed earlier attempt is that it can take a long time for the maintenance personnel to get to the elevator, thus decreasing the availability and safety of the elevator operation. Thus, there is still a need to develop solutions for providing maintenance to an elevator car being halted in the elevator shaft.

Document DE 10 2016 205236 A1 discloses an elevator and a method according to the preamble of claims 1 and 15. It presents a method for operating a lift system, and a lift system carrying out the method. The lift system, in particular a lift system operated via linear motors, comprises a shaft system having at least one vertical lift shaft, and a plurality of lift cars, each having multiple functional components for carrying out different functions. In the method, in a special operating mode of the lift system, at least one auxiliary device is assigned to a first lift car, wherein the at least one auxiliary device provides a replacement function for at least one function of one of the functional components of the first lift car, whereby the replacement function provided by the at least one auxiliary device replaces the corresponding at least one function of a functional component of the first lift car, and the lift system continues to be operated using the provided replacement function.

Document US 2017/0029245 A1 presents a method and system for managing an elevator system, includes providing a recovery car to travel in the hoistway via a motor, and engaging the car via an attachment device of the recovery car.

### SUMMARY

An objective of the present invention is to provide a movable maintenance robot system, a method for providing maintenance to an elevator car, and an elevator. Another objective of the present invention is that the robot system, the method, and the elevator can be utilized to provide maintenance to the elevator car without the presence of maintenance personnel in the elevator shaft.

The objectives of the invention are reached by an elevator and a method for providing maintenance to an elevator car as defined by the respective independent claims.

According to a first aspect, an elevator is provided. The elevator comprises at least one elevator car, and an electric linear motor comprising at least one stator beam arranged in fixed manner with respect to and to extend along an elevator shaft of the elevator for moving the elevator car. The elevator further comprises a movable maintenance robot system for providing maintenance and/or rescue operation to an elevator car of an elevator, such as by moving the elevator car to a landing floor or a maintenance position or a rescue position.

The movable maintenance robot system comprises a movable maintenance robot comprising at least one motor portion, wherein the at least one motor portion is configured for moving along at least one first motor portion, which is a designated first motor portion, arranged in fixed manner with respect to and to extend along the elevator shaft, wherein the movable maintenance robot is configured so that it can pass the elevator car along the designated first motor portion. The movable maintenance robot system further comprises a coupling interface for coupling the movable maintenance robot with the elevator car to provide the maintenance and/or the rescue operation, wherein the coupling interface comprises a first part and a second part, wherein the first part is arranged to the movable maintenance robot and configured for coupling with the second part, the second part being adapted for coupling to the elevator car.

The term "rescue operation" may refer to providing electrical power, lighting, air conditioning, such as ventilating, communication connection, etc. to the faulty elevator car.

The term "elevator shaft" may mean vertical, inclined and/or horizontal pathway associated with, for example, a building, such as multistorey building.

Said stator beam or beams may preferably be further utilized for moving the elevator car or cars of the elevator.

The designated first motor portion may preferably extend in the elevator shaft in similar manner as the stator beam or beams, that is, in parallel with the stator beam or beams. In some embodiments, the designated first motor portion may be substantially similar with respect to the stator beam of the electrical linear motor.

Furthermore, the at least one motor portion may comprise at least one first motor winding configured to establish an electromagnetic engagement with a corresponding first motor portion for the robot to be moved along the corresponding first motor portion.

The movable maintenance robot may be configured to provide maintenance to the elevator car only by at least one of the following: independent operation or remote control. Remote control may refer to control from a remote unit, such as from maintenance or a call out center or remote server via a wired and/or wireless data network. Additionally or alternatively, the remote control may mean control from a user interface placed outside the elevator shaft.

The movable maintenance robot may be implemented without, that is not comprising, transportation means for transporting a number of persons, that is the robot is not designed to transport person(s).

In some embodiments, the coupling interface may comprise a mechanical coupling means between the robot and the elevator car for moving, such as towing or pushing, the elevator car by the robot.

In some embodiments, the coupling interface may comprise an electrical coupling means between the robot and the elevator car. Alternatively or in addition, the electrical coupling may be arranged between the robot and at least one motor winding of a second motor portion, such as of a mover, of the electric linear motor, wherein the second motor portion is coupled to the elevator car and configured for moving along the first motor portion.

In some embodiments, the coupling interface may comprise magnetic coupling means, such as comprising permanent magnets or electromagnets, for moving the elevator car by the robot.

According to a second aspect, a method for providing maintenance and/or rescue operation to an elevator car of an elevator, such as by moving the elevator car to a landing floor or a maintenance position or a rescue position, is provided. The elevator comprises an electric linear motor comprising at least one stator beam arranged in fixed manner with respect to and to extend along an elevator shaft of the elevator. The method comprises
- arranging a movable maintenance robot comprising a motor portion configured to be moved along a first motor portion, which is a designated first motor portion, arranged in fixed manner with respect to and to extend along the elevator shaft, wherein the movable maintenance robot is configured so that it can pass the elevator car along the designated first motor portion, and comprising a first part of a coupling interface for coupling with a second part of the coupling interface,
- arranging the second part to the elevator car,
- coupling the movable maintenance robot to the elevator car by the coupling interface, and
- providing maintenance and/or rescue operation to the elevator car.

Furthermore, the arranging of the robot may comprise arranging the robot to be in an electromagnetic engagement with the first motor portion and to be moved along the first motor portion, wherein the electromagnetic engagement is arranged via at least one first motor windings of the robot.

In some embodiments, the coupling may comprise arranging a mechanical coupling between the first and the second parts for moving the elevator car by the robot.

Alternatively or in addition, the coupling may comprise arranging an electrical connection between the robot and the elevator car. Furthermore, in an embodiment, the electrical connection may be arranged between the robot and at least one motor winding of a second motor portion, such as of a mover, of the electric linear motor, wherein the second motor portion is coupled to the elevator car and configured for moving along one of the at least one stator beam.

In various embodiments, the electric linear motor may comprise a second motor portion, such as a mover, configured for moving along one of the at least one stator beam, wherein said second motor portion comprises at least one motor winding for establishing an electromagnetic engagement with said stator beam. The elevator car may comprise a drive unit for energizing the at least one motor winding, and a switch configured to separate the drive unit from the at least one motor winding, wherein the coupling interface comprises a power connector connected or connectable to the at least one motor winding of the second motor portion, and wherein the maintenance robot is configured to supply electrical energy via the power connector to the at least one motor winding upon separation of the at least one motor winding from the drive unit.

In some embodiments, the maintenance robot may comprise a first control unit.

In addition, the elevator may comprise an elevator control unit, a communication connection arranged between the elevator control unit and the first control unit. The maintenance robot may be configured to perform at least one maintenance function based on a control command received from the elevator control unit.

In some embodiments, the elevator may comprise at least one sensor communicatively connected to the elevator control unit, the at least one sensor being configured to provide information of operation of the maintenance robot. The elevator control unit may be configured to monitor the operation of the maintenance robot based on the information received from the at least one sensor or to transfer the information further to a remote maintenance server. The sensor may be, for example, a position sensor, a speed sensor, an acceleration sensor and/or a camera.

In various embodiments, the maintenance robot may be configured to stop operation responsive to a stop signal received from the elevator control unit.

In some embodiments, the electrical coupling means may be configured to arrange the electrical connection between the robot and at least one motor winding of a second motor portion, such as a mover, of the electric linear motor, wherein the second motor portion is coupled to the elevator car and configured for moving along one of the stator beams.

The elevator may comprise at least two movable maintenance robots arranged to be moved along a number of first motor portions. Additionally, the at least two movable maintenance robots may be configured to provide maintenance simultaneously to one elevator car, that is, they may co-operate in providing the maintenance and/or the rescue operation.

The present invention provides a movable maintenance robot system and a method for providing maintenance to an elevator car of an elevator, and an elevator. The present invention provides advantages over known solutions in that the maintenance can be provided without any maintenance personnel entering the elevator shaft. Furthermore, as no maintenance personnel are required in the shaft, maintenance can be provided more quickly due to not having to wait for the personnel to arrive at the elevator site.

Various other advantages will become clear to a skilled person based on the following detailed description.

The expression "a number of" may herein refer to any positive integer starting from one (1).

The expression "a plurality of" may refer to any positive integer starting from two (2), respectively.

The terms "first", "second" and "third" are herein used to distinguish one element from other element, and not to specially prioritize or order them, if not otherwise explicitly stated.

The exemplary embodiments of the present invention presented herein are not to be interpreted to pose limitations to the applicability of the appended claims. The verb "to comprise" is used herein as an open limitation that does not exclude the existence of also un-recited features. The features recited in depending claims are mutually freely combinable unless otherwise explicitly stated.

The novel features which are considered as characteristic of the present invention are set forth in particular in the appended claims. The present invention itself, however, both as to its construction and its method of operation, together with additional objectives and advantages thereof, will be best understood from the following description of specific embodiments when read in connection with the accompanying drawings.

### BRIEF DESCRIPTION OF FIGURES

Some embodiments of the invention are illustrated by way of example, and not by way of limitation, in the figures of the accompanying drawings.
Figure 1 illustrates schematically an elevator according to an embodiment of the present invention.
Figure 2 illustrates schematically an elevator according to an embodiment of the present invention.
Figure 3 illustrates schematically a movable maintenance robot system according to a non-claimed embodiment.
Figure 4 illustrates schematically a movable maintenance robot system according to a non-claimed embodiment.
Figures 5A and 5B illustrate schematically a coupling interface according to an embodiment of the present invention.
Figure 6 illustrates schematically a coupling interface according to an embodiment of the present invention.
Figure 7 illustrates schematically a coupling interface according to an embodiment of the present invention.
Figure 8 illustrates a flow diagram of a method according to an embodiment of the present invention.
Figures 9A and 9B illustrate schematically elevators according to some non-claimed embodiments.
Figure 10A illustrates schematically an elevator according to an embodiment of the present invention.
Figure 10B illustrates schematically an elevator according to a non-claimed embodiment.

### DETAILED DESCRIPTION OF SOME EMBODIMENTS

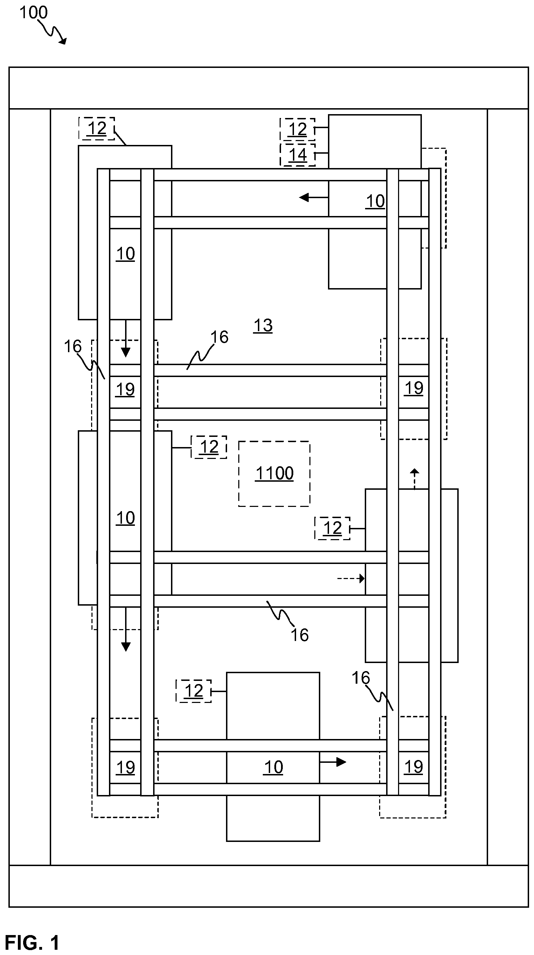

Figure 1 illustrates schematically an elevator 100 according to an embodiment of the present invention. The elevator 100 may comprise at least one or a plurality of elevator cars 10 moving in the elevator shaft 13 or the elevator car pathway 13.

According to various embodiments, the elevator car(s) 10 may comprise a first electrical drive 12 or a drive unit 12, such as a frequency converter or an inverter, and/or a first energy storage 14 such as a battery or batteries, which are shown with dashed lines indicating the optionality of the feature. The first electrical drive 12 may be utilized for operating a mover arranged to the elevator car 10 for moving the car 10 within the elevator shaft 13. There may also be other electrically operated equipment in the elevator car 10 such as lighting, doors, user interface, emergency rescue equipment, etc. The first electrical drive 12 or a further electrical drive, such as an inverter or a rectifier, may be utilized for operating one or several of said other equipment of the elevator car 10. The first energy storage 14 may, preferably, be electrically coupled to the first electrical drive 12, for example, to the intermediate circuit of the drive, for providing electrical power to the first electrical drive 12 and/or for storing electrical energy provided by the first electrical drive 12 or a further electrical drive or other electrical power source.

There may preferably be at least two landing floors, having landing floor doors 19 or openings 19, comprised in the elevator 100. There may also be doors comprised in the elevator car 10. Although in Fig. 1 it is shown that there are two horizontally separated sets, or "columns", of vertically aligned landing floors, there could as well be only one column as in conventional elevators or more than two, for example, three.

Regarding the elevator shaft 13, it may be such as defining substantially closed volume in which the elevator car 10 is adapted and configured to be moved. The walls may be, for example, of concrete, metal or at least partly of glass, or any combination thereof. The elevator shaft 13 herein refers basically to any structure or pathway along which the elevator car 10 or cars 10 are configured to be moved.

As can be seen in Fig. 1 with respect to the elevator 100, the elevator car 10 or cars 10 may be moved within the elevator shaft 13 along a stator beam 16 or beams 16 vertically and/or horizontally depending on the direction of the stator beams 16. According to embodiments similar to one in Fig. 1 in this respect, the elevator car 10 or cars 10 may be configured to be moved along a number of vertical 16 and/or horizontal 16 stator beams, for example, two beams such as in Fig. 1. The stator beams 16 may be part of an electric linear motor of the elevator 100 utilized to move the elevator car 10 or cars 10 in the elevator shaft 13. The stator beams 16 may, preferably, be arranged in fixed manner, that is, stationary with respect to the elevator shaft 13, for example, to a wall of the shaft by fastening portions, which may be arranged to rotatable at direction changing positions of the elevator car 10, if any.

The elevator 100 may comprise an elevator control unit 1100 for controlling the operation of the elevator 100. The elevator control unit 1100 may be a separate device or may be comprised in the other components of the elevator 100 such as in or as a part of the electrical drive 12. The elevator control unit 1100 may also be implemented in a distributed manner so that, e.g., one portion of the elevator control unit 1100 may be comprised in the electrical drive 12 and another portion in the elevator car 10. The elevator control unit 1100 may also be arranged in distributed manner at more than two locations or in more than two devices.

The elevator control unit 1100 may comprise one or more processors, one or more memories being volatile or non-volatile for storing portions of computer program code and any data values and possibly one or more user interface units. The mentioned elements may be communicatively coupled to each other with e.g. an internal bus.

The processor may be configured to execute at least some portion of computer program code stored in the memory causing the processor, and thus the elevator control unit 1100, to perform desired tasks. The processor may thus be arranged to access the memory and retrieve and store any information therefrom and thereto. For sake of clarity, the processor herein refers to any unit suitable for processing information and control the operation of the elevator control unit 1100, among other tasks. The operations may also be implemented with a microcontroller solution with embedded software. Similarly, the memory is not limited to a certain type of memory only, but any memory type suitable for storing the described pieces of information may be applied in the context of the present invention.

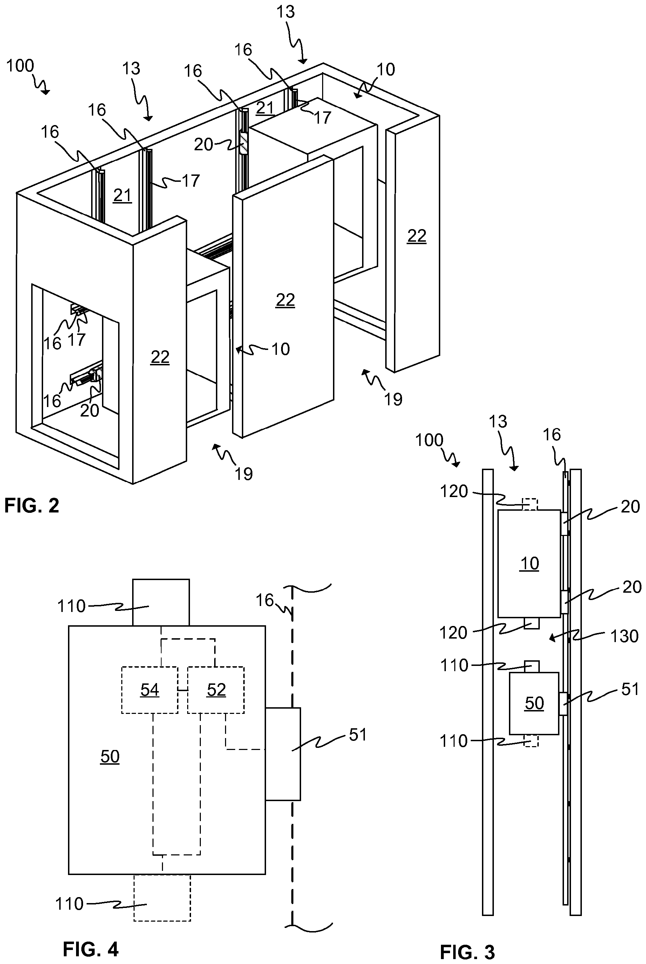

Figure 2 illustrates schematically a part of an elevator 100 according to an embodiment of the present invention. There are two elevator cars 10 configured to be moved in the elevator shaft 13 by an electric linear motor. The electric linear motor comprises a stator 17 or stators 17 comprised in a stator beam 16 or beams 16, in this case two. A stator beam 16 may be arranged vertically or horizontally, that is, in Figs. 1 and 2 the elevator 100 comprises vertical stator beams 16 and horizontal stator beams 16. However, the stator beam 16 or beams 16 may also be arranged to any direction(s) in which the elevator car 10 is desired to be moved. One stator beam 16 may, preferably, be comprised of a plurality of stator beam parts arranged one after another to yield the desired length for the stator beam 16 in whole.

The mover 20 may, preferably, be a C-shaped or U-shaped (not shown). The mover 20 may, preferably, comprise at least one or several permanent magnets and/or magnetic core element(s) or ferromagnetic material, and optionally, a unit or units of electromagnetic components comprising at least one coil or winding. The unit or units of electromagnetic components may, preferably, be comprised in the mover 20 and adapted to face the stator 17 or stators 17 of the stator beam 16. However, in some embodiments, the mover 20 may comprise only one or several permanent magnets and/or magnetic core element(s) or ferromagnetic material, while the unit or units of electromagnetic components reside in the stator beam 16. The unit or units of electromagnetic components may be part of the stator 17 thus enabling forming of the controllable magnetic field for moving the mover 20 in electromagnetic engagement with the stator 17.

The units of electromagnetic components, when comprised in the mover 20, may be arranged to be in electromagnetic engagement with the stators 17 for moving the mover 20 along the stator beam 16. There may also be a support portion by which mover 20 may be attached or coupled to the elevator car 10, for example, to the back wall of the car 10. The mover 20 may be shaped and designed in such a way as to enable the movement of the mover 20 along the stator beam 16 without interference from the fastening or support portions therein.

The movement of the mover 20 along the stator beam 16 may be implemented by known control methods, such as, field-oriented or vector control or the like. The basic idea is to produce an alternating magnetic field, for example by an electrical drive 12, by injecting current to a unit of electromagnetic components of the mover 20, such as to a winding or coil thereof. The unit of electromagnetic components facing the stator 17 then co-acts with the stator 17 through the electromagnetic engagement and produces a force which moves the mover 20 and thus the elevator car 10 along the stator beam 16.

The stator beam 16 may comprise at least one stator 17 extending substantially along the whole stator beam 16. There may, advantageously, be four stators 17 arranged at all four sides of the stator beam 16, such as in Fig. 2.

There may also be a fastening portion or portions by which said part 16 may be attached in fixed manner to the structures, such as a wall, of the elevator shaft 13. The fastening portion may also be a separate fastening portion which may then be attached to the stator beam 16 for arranging the stator beam 16 into the elevator shaft 13 or the fastening portion may be an integrated part of the stator beam 16 or a part thereof. The stators 17 may, preferably, be of ferromagnetic material and comprise teeth on their outer surface for providing a suitable magnetic circuit for co-acting with the mover 20. According to a preferable embodiment of the present invention, the stator beam 16 or beams 16 are passive in the sense that they do not comprise controllable elements or components, such as coils, for controlling the movement of the mover 20 along the stator beam 16.

According to another embodiment of the present invention, the mover 20 coupled to the elevator car 10 comprises at least one permanent magnet and/or part or parts of magnetic circuit made of ferromagnetic material. According to this embodiment, the stator 17 comprises controllable electromagnetic component or components such as units of electromagnetic components. Thus, the mover 20 may be passive and the stator 17 may be configured to produce the magnetic force for moving the mover 20.

The electric linear motor further comprises a mover 20 or movers 20 arranged or coupled to the elevator car 10 or cars 10. The mover 20 or movers 20 may be arranged to be in electromagnetic engagement with the stator 17 or stators 17 comprised in the stator beam 16 along which the mover 20 may be configured to be moved, thus enabling the movement of the elevator car 10 with which the mover 20 has been mechanically coupled with.

In Fig. 2, the stator beams 16 are arranged to the back wall 21 of the elevator shaft 13. It should be noted, however, that the elevator shaft 13 refers herein to the any elevator car pathway 13 which, as described above, may include vertical parts, horizontal parts, and/or parts having a third direction different with respect to vertical and horizontal directions. For example, the part of the elevator shaft 13 depicted in Fig. 2 essentially comprises two vertical parts and one horizontal part.

In Fig. 2, the elevator shaft 13 or the elevator car pathway 13 further comprises a front wall 22. The front wall 22 may, preferably, comprise an opening 19 for entering into the elevator car 10 or cars 10. Although shown in Fig. 2 that the opening 19 for entering the elevator cars 10 is arranged only at vertical parts of the elevator shaft 13, the opening 19 may as well be arranged to the horizontal part or any part of the elevator shaft 13. It should be noted, however, that the elevator shaft 13 may in some cases comprise only one wall or a structure arranged to accommodate the necessary equipment such as the stator beam 16. Thus, the elevator shaft 13 or the elevator car pathway 13 does not necessarily have to define a substantially closed volume, that is, surrounded by wall elements or glass or any other structures as long as there is at least a support structure to support the stator beam(s) 16.

The elevator 100, or particularly the elevator shaft 13 or shafts 13 thereof, according to the various embodiments of the present invention may comprise at least one, however, preferably more than one, positions for changing the direction of movement of the elevator car 10 at which the direction of movement of an elevator car 10 may be changed from one direction to another, which said another is un-parallel relative to said one direction, for example, such as when changing the direction between the vertical and horizontal directions. In Fig. 2, there are shown two such positions. The changing of the direction at these positions may be implemented, for example, by rotatable stator beam parts and/or rotatable movers 20 coupled to the elevator car 10.

According to some embodiments, the stator beam 16 may comprise stators 17 on opposite sides of the stator beam 16. The stators 17 may be, for example, two of the four stators 17. The stators 17 may comprise stator teeth having a distance between two consecutive teeth. The mover 20 may comprise units of electromagnetic components arranged to face the stators 17 of the stator beam 16 and configured to establish an electromagnetic engagement between said units and stators 17, preferably, over an air gap to enable movement of the mover 20 with respect to the stator beam 16.

The mover 20 preferably comprises coils comprised in the units of electromagnetic components that may be arranged around, for example, magnetic teeth arranged to the armature of the mover 20. In this case, each one of said units comprises coils, for example for three-phase current injection by an electrical drive 12, and, optionally, preferably permanent magnets and/or ferromagnetic material or mover irons. There may, alternatively, be more or fewer coils. The coils may be controlled, for example, so as to inject three-phase current having a phase shift of 120 degrees between two phases. The coils may be controlled, as stated hereinbefore, by an electrical drive 12 such as a frequency converter or an inverter. If an electrical energy storage 14, such as a battery, coupled to the elevator car 10 is being utilized, the electrical drive 12, such as a frequency converter, may draw electrical power from the storage to convert the direct current (DC) of the battery to suitable AC for the mover 20 to be moved along the stator beam 16.

Figure 3 illustrates schematically a movable maintenance robot system arranged in an elevator shaft 13 according to a non-claimed embodiment. There may preferably be at least one elevator car 10 arranged to be moved along the stator beam 16 or beams 16 of the linear motor of the elevator 100. Furthermore, the maintenance robot 50 may be arranged to be moved along the same stator beam 16 or, alternatively, along a second stator beam arranged in parallel with the stator beam 16 in the same elevator shaft 13. In various embodiments, the elevator car 10 may comprise a second part 120 and the maintenance robot 50 a first part 110, wherein the first 110 and second 120 parts may be comprised in a coupling interface 130 of the elevator 100.

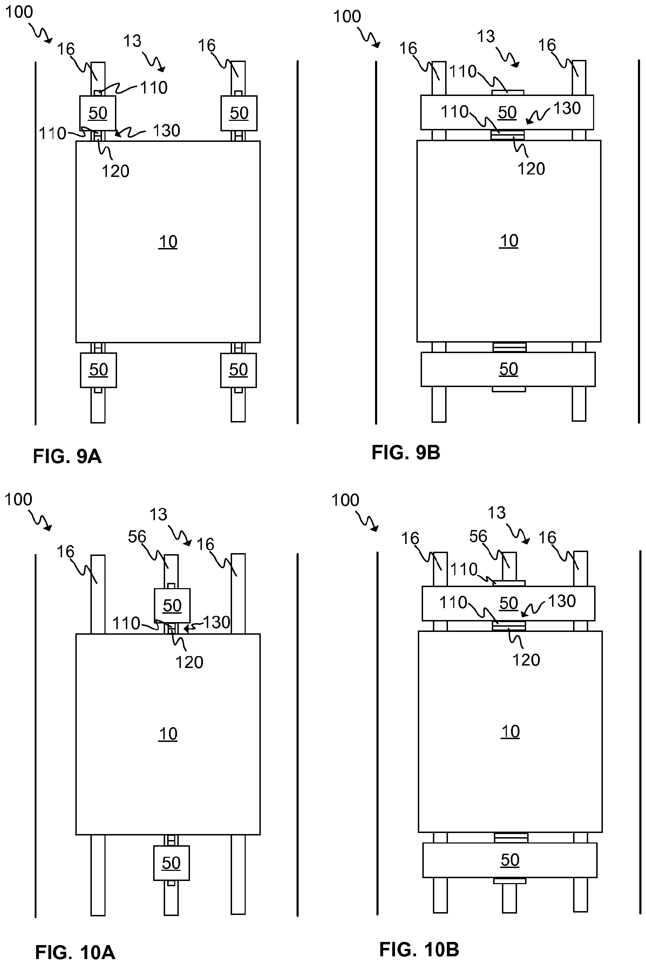

According to various embodiments, the movable maintenance robot 50 for providing maintenance and/or rescue operation to an elevator car 10 of an elevator 100, such as by moving the elevator car 10 to a landing floor or a maintenance position or a rescue position, may comprise a motor portion, such as a mover 20 similar to one in Fig. 1 or Fig. 2, configured for moving along a designated first motor portion 56 (shown in Figs. 10A and 10B), and a coupling interface 130 for coupling the robot 50 with the elevator car 10 for providing the maintenance.

According to a non-claimed embodiment, the maintenance robot 50 may comprise two motor portions 51 arranged to be moved along a stator beam 16. According to a non-claimed embodiment, the two motor portions 51 may be arranged to be moved along different stator beams 16, such as two stator beams 16 arranged extending in the elevator shaft 13 in parallel with respect to each other. Furthermore, there may be four motor portions 51 arranged to be moved along the two stator beams 16 such that there are two motor portions 51 per one stator beam 16.

According to the invention, the elevator 100 comprises a designated first motor portion 56, for moving the robot 50, the designated first motor portion 56 being arranged to extend in parallel with respect to the stator beams 16 along which the elevator car 10 is arranged to be moved. According to some examples, the designated first motor portion 56 extends next to a stator beam 16 or between two stator beams 16 along which the elevator car 10 is arranged to be moved. The designated stator beam 56 may preferably be arranged such that the first 110 and second 120 parts of the coupling interface 130 may be arranged at least in functional connection with each other and, optionally, additionally in mechanical connection or contact with each other. The designated first motor portion 56 is illustrated in Figs. 10A and 10B.

According to the invention, the robot 50 is configured such that it may pass or go round the elevator car 10 along the designated stator beam 56. The robot 50 may preferably be arranged such that the first part 110 of the coupling interface 130 does not become in contact with the elevator car 10 when passing the car 10. The first part 110 may be, for example, arranged such as it 110 may be retracted and extended with respect to the robot 50.

In various embodiments, comprising the robot 50 arranged to be moved along a designated first motor portion 56, the first 110 and the second 120 parts of the coupling interface 130 may be arranged such that when becoming in contact with one another or when the robot 50 is arranged into a position to provide maintenance and/or rescue operation, the first 110 and the second 120 parts are positioned such as to enable or to provide the coupling for providing the maintenance, such as aligned or arranged at corresponding positions with respect to each other. This may entail, for example, that the first part 110 may be mechanically coupled to the second part 120. Alternatively or in addition, there may be an electrical connection being established between the first 110 and the second 120 parts, that is, through the coupling interface 130. Still further, alternatively or in addition, the coupling may comprise establishing a magnetic or electromagnetic coupling between the first part 110 and the second part 120. Figure 4 illustrates schematically a non-claimed movable maintenance robot system according to an embodiment. The maintenance robot 50 may comprise one or several, for example two, first parts 110 of the coupling interface 130. Furthermore, the robot 50 may comprise an electrical drive 52 of the robot, such as a frequency converter or an inverter, and/or an energy storage 54 of the robot 50, such as a battery or batteries, which are shown with dashed lines indicating the optionality of the feature. The electrical drive 52 may comprise a first control unit or be in connection with a first control unit of the robot 50. The electrical drive 52 may be utilized for operating a motor portion 51 arranged to the robot 50 for moving the robot 50 within the elevator shaft 13. There may also be other electrically operated equipment in the robot 50 such as lighting, user interface, emergency rescue equipment, etc. The electrical drive 52, such as an inverter or a rectifier, may be utilized for operating one or several of said other equipment of the robot 50. The energy storage 54 may, preferably, be electrically coupled to the electrical drive 52, for example, to the intermediate circuit of the drive, for providing electrical power to the electrical drive 52 and/or for storing electrical energy provided by the electrical drive 52. In Fig. 4, the robot 50 comprises two first parts 110 arranged on opposite sides of the robot 50 for coupling to an elevator car 10 on either side of the robot 50. Some electrical and/or communication connections between various elements are shown in Fig. 4 with dashed lines.

In various embodiments, the capacity of the energy storage 54 of the robot 50 may be such as to store enough electrical energy to provide electrical power to move the robot 50 and the push or pull the elevator car 10 to a closest landing floor, or to a maintenance position, or to a rescue position. In some embodiments, the motor portion 51 of the robot 50 may be such as to provide enough force to be able to move an elevator car 10 being loaded at least with a nominal amount of persons or mass inside the car 10.

Furthermore, in some embodiments, the motor portion 51 may comprise at least one first motor winding configured to establish an electromagnetic engagement with the first motor portion, for example, with the stator 17 of the stator beam 16, for the robot 50 to be moved along the first motor portion.

The robot 50 may be configured to provide maintenance and/or rescue operation to the elevator car 10 only by one of the following: independent operation or remote control. Independent operation may entail that the robot 50 may move autonomously within the elevator shaft 13 based on data from sensors and systems indicating that there is a need for providing maintenance. Remote control refers to a situation of human involvement via a remote controlling device. The remote control may include monitoring the movement of the robot 50 within the elevator shaft 13, for example, by cameras and/or sensors such that the operator can move the robot 50 in controlled manner.

According to various embodiments, the movable maintenance robot 50 may be implemented without, that is not comprising, transportation means for transporting a number of persons. This means that in these particular embodiments the robot 50 may preferably be arranged to provide maintenance by independent operation and/or by remote control, and not including human involvement at the robot 50, that is, for example, having persons onboard the robot 50.

In various embodiments, the coupling interface 130 may comprise a mechanical coupling between the robot 50 and the elevator car 10 for moving, such as towing or pushing, the elevator car 10 by the robot 50. Thus, the coupling interface 130 may comprise, for example, surfaces in the robot 50 and the elevator car 10 arranged to be in contact with each other for pushing the car 10. In some embodiments, the first part 110 may be an extending portion of the robot 50 comprising the surface, however, the second part 120 may essentially define an area on the surface of the elevator car 10 arranged to receive the first part 110 in contact with the second part 120. In some embodiments, the mechanical coupling may comprise a hook-like coupling thus enabling pulling of the elevator car 10 by the robot 50. The hook-like coupling may comprises an actuator for changing the position of the hook between open and closed positions with respect to a counter-part of the hook-like coupling, such as a loop or a lug.

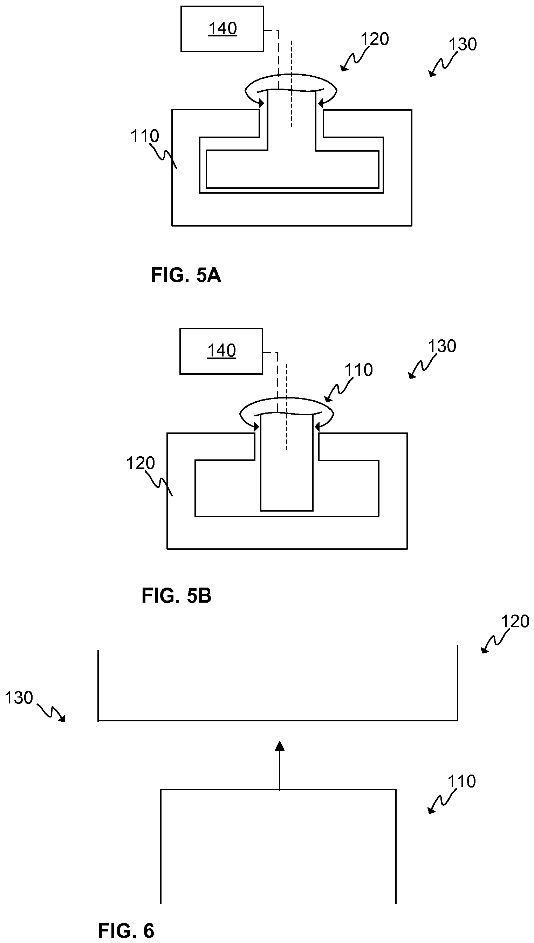

Figures 5A and 5B illustrate schematically a coupling interface 130 according to an exemplifying embodiment of the present invention. Fig. 5A illustrates the coupling interface 130 in closed position, that is, the first 110 (C-shaped element) and the second 120 (T-bar) parts being coupled with each other. Fig. 5B illustrates the coupling interface 130 in open position, that is, the first 110 and the second 120 parts being not coupled with each other. The actuator 140 may be arranged to change the position of the second part 120, such as by rotating it around its longitudinal axis. However, in another embodiment the actuator 140 may be arranged, alternatively or in addition, to change the position of the first part 110. As illustrated in Figs. 5A and 5B, the coupling interface 130 provides a mechanical coupling via which the robot 50 may be arranged to push or pull the elevator car 10. According to still another embodiment, the robot 50 may comprise the T-bar and the actuator 140, while the C-shaped element may be comprised in the elevator car 10.

In various embodiments, the coupling interface 130 may comprise an electrical coupling between the robot 50 and the elevator car 10. The electrical coupling may be arranged alternatively or in addition to the mechanical coupling. In some embodiments, the electrical coupling may be arranged through first 110 and second 120 parts becoming in contact with one another, or at least the electrical coupling portions thereof. However, the electrical coupling may be arranged by a capacitive or inductive coupling, that is, not necessarily requiring mechanical contact between the first 110 and the second 120 parts.

According to some embodiments, the electrical coupling may be arranged between the robot 50 and at least one motor winding of a second motor portion, the mover 20, of the electric linear motor, wherein the second motor portion is coupled to the elevator car 10 and configured for moving along the first motor portion, that is, the stator beam 16.

Furthermore, the electrical coupling may be arranged between the electrical drive 52 comprised in the robot 50 and the mover 20 comprised in the elevator car 10 such that current may be injected into the coil(s) or winding(s) of the mover 20 for moving the elevator car 10 along the stator beam 16. Said electrical coupling may comprise galvanic, that is a direct connection, such as an electrical connector or electrically conductive surfaces arranged between the first part 110 and the second part 120 to be in contact with one another to form the current conduction path, or a capacitive or an inductive connection, for example, coils on both the first 110 and second 120 parts in order to form the inductive coupling when arranged to proper position with respect to each other. The proper position refers herein to the situation when the robot 50 is being arranged close to the elevator car 10 for providing the maintenance.

Furthermore, alternatively or in addition, the coupling interface 130 may comprise a communication connection between the robot 50 and the elevator car 10 via the coupling interface 130 or in some other way, such as wirelessly by using wireless ethernet or by utilizing short range wireless communication.

According to various embodiments, the communication connection may be established simultaneously with the mechanical or electrical coupling.

In some embodiments, the communication connection may be utilized to transmit data or signals between the robot 50 and the elevator car 10. The data or signals may be utilized in identifying the fault condition, such as by reading fault information, or they may be utilized for driving the mover 20 by the electrical drive 52, for instance. Still further, a signal may be transmitted from the robot 50 to the elevator car 10 in order to, for example, open the elevator car door and/or turn on lighting, or establish a communicating connection between the elevator car 10 and an external system, such as elevator monitoring system, in order for the maintenance personnel to be able to speak with the person(s) inside the elevator car 10.

In various embodiments, the elevator 100 may comprise a service area or a temporary place into which the maintenance robot 50 may be arranged in order not to block elevator cars 10 being moved in the elevator shaft 13.

Figure 6 illustrates schematically a coupling interface 130 according to an embodiment of the present invention. In Fig. 6, there may be no gripping elements, however, only buffer contact surfaces such that robot 50 can push the car 10 upwards or downwards, for instance, depending on which side of the car 10 the robot 50 resides. This means that in some embodiments the second part 120 may essentially be merely a surface, that is not a separate dedicated device, of the elevator car 10, if only a mechanical contact between the robot 50 and the car 10 is needed.

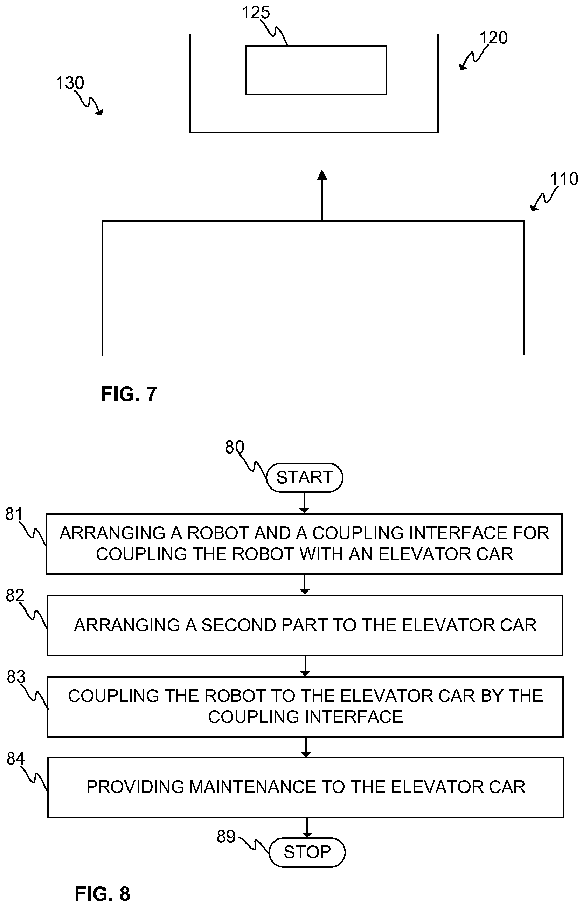

Figure 7 illustrates schematically a coupling interface 130 according to an embodiment of the present invention. In Fig. 7, gripping may take place by a magnet 125. In an embodiment, an electromagnet may be energized by supplying current, such as from a battery of the robot 50. In an alternative embodiment, gripping force may be generated with a permanent magnet or magnets. To detach the car 10 from the robot 50, current must be supplied to compensate the magnetic field of the permanent magnet. Alternatively, two permanent magnets may be arranged such as to they may be twisted relative to each other, such as pneumatically, to grip and release the car, such as Magswitch lifting magnets. In these cases, the counterpart, such as the first part 110 of the coupling interface 130, may be made of ferromagnetic material.

Figures 5A-7 illustrate schematically some embodiments of the coupling interface 130. It is to be noted, however, that the coupling interface 130 may be implemented in various different ways in accordance with the present invention, that is, also in ways not shown in said figures. The examples shown in Figs. 5A-7 should not be interpreted to be an exhaustive list of possible ways to implement the coupling interface 130.

According to various embodiments, the robot 50 may comprise a platform for sub-robots, such as for a drone or remote controlled unmanned aerial vehicles, which may be utilized to perform duties related to the maintenance and/or the rescue operation.

According to various embodiments, the robot 50 may be configured to provide means for moving the elevator car 10 via the coupling interface 130, that is, the motor portion 51 of the robot 50 may be configured to functionally replace a faulty mover 20 of the elevator car 10.

In embodiments in which an electrical connection may be arranged between the robot 50 and the second motor portion, such as a mover 20, of the elevator car 10, the robot 50 may be configured to functionally replace a faulty electrical drive of the elevator car 10 and, thus, to operate the mover 20 by an electrical drive comprised in the robot 50. According to various embodiments, the robot 50 may be configured to provide electrical power to operate the communication equipment and/or lighting of the elevator car 10.

According to various embodiments, the robot 50 may comprise a power tool, such as a hydraulic tool, that may be used to separate the second motor portion, such as the mover 20, from the stator beam 16 upon failure of the second motor portion. The power tool may be arranged to or carried by the motor portion 51 of the robot 50. By detaching the second motor portion, such as the mover 20, from the stator beam 16, the robot 50 may move the elevator car 10 more easily due to reduced friction between the second motor portion and the stator beam 16.

Figure 8 illustrates a flow diagram of a method according to an embodiment of the present invention.

Step 80 may refer to a start-up phase of the method. Suitable equipment and components may be obtained, and systems assembled and configured for operation.

Step 81 refers to arranging a movable maintenance robot 50 comprising a motor portion 51 configured to be moved along a first motor portion 56 arranged in fixed manner with respect to and to extend along the elevator shaft 13, and comprising a first part 110 of a coupling interface 130 for coupling with a second part 120 of the coupling interface 130.

Step 82 refers to arranging the second part 120 to the elevator car 10.

Step 83 refers to coupling the movable maintenance robot 50 to the elevator car 10 by the coupling interface 130. In various embodiments, the coupling 83 may be mechanical and/or electrical, such as a direct connection, capacitive or inductive connection, and/or communicative connection, such as wired or wireless.

Step 84 refers to providing maintenance and/or rescue to the elevator car 10. This may entail pushing or pulling to car 10 by the robot 50, or by injecting current into coils of the mover 20, that is driving the mover 20 to a landing floor or a rescue position for rescuing persons inside the car 10.

Method execution is stopped at step 89.

In an embodiment, the arranging 82 of the robot 50 may comprise arranging the robot 50 to be in an electromagnetic engagement with the first motor portion 56 and to be moved along the first motor portion 56, wherein the electromagnetic engagement is arranged via at least one first motor windings of the robot 50.

In an embodiment, the coupling 83 may comprise arranging a mechanical coupling between the first 110 and the second 120 parts for moving the elevator car 10 by the robot 50.

Furthermore, the coupling 83 may comprise arranging an electrical connection between the robot 50 and the elevator car 10, either via the coupling interface 130 or through a separate connection means with respect to the coupling interface 130. Optionally, the electrical connection may be arranged between the robot 50 and at least one motor winding of a second motor portion, that is the mover 20, of the electric linear motor, wherein the second motor portion is coupled to the elevator car 10 and configured for moving along one of the at least one stator beam 16.

According to various embodiments, the elevator car 10 may comprise a user interface, preferably inside the car 10. The user interface may be configured such that the passengers may operate the robot 50 or through the robot 50, such as by commanding the robot 50 to move the elevator car 10, or to communicate through the robot 50 with the maintenance personnel.

According to various embodiments, the elevator car 10 may comprise a rescue hatch, and the robot 50 may be configured to open the hatch when coupled with the elevator car 10, such as by operating an actuator for opening the hatch. Additionally, the robot 50 may comprise a display, such as a touch display, and, optionally, a speaker and a microphone, in order for maintenance and/or medical personnel to interact with the passenger through the opening of the hatch. Furthermore, the robot 50 may comprise means for providing items for the passengers, such as for the passengers to obtain from the robot 50 via the opening of the hatch. By said means, for example, medication may be transported by the robot 50 to the passengers.

Figures 9A and 9B illustrate schematically elevators 100 according to some non-claimed embodiments. Fig. 9A illustrates an electric linear motor of the elevator 100 comprising two stator beams 16. As can be seen, there may be four movable maintenance robots 50 arranged to be moved along the stator beams 16. In this case, there are two robots 50 arranged to be moved along one stator beam 16. Each of the robots 50 may comprise one motor portion 51 (not shown) arranged to be moved along the stator beam 16 and, thus, to move the robot 50 along said stator beam 16. Each robot 50 may comprise first portion 110 of the coupling interface 130 at least on one side, preferably on two sides, of the robot 50. The elevator car 10, in this case, comprises four second parts 120 being arranged such as coupling through coupling interfaces 130 between the elevator car 10 and each of the robots 130 may be established.

Figure 9B illustrates an electric linear motor of the elevator 100 comprising two stator beams 16. As can be seen, there may be two movable maintenance robots 50 arranged to be moved along the stator beams 16. In this case, there is one robot 50 arranged to be moved along both stator beams 16. Each of the robots 50 may comprise two motor portions 51 (not shown) arranged to be moved along the stator beams 16 and, thus, to move the robot 50 along said stator beam 16. Each robot 50 may comprise first portion 110 of the coupling interface 130 at least on one side, preferably on two sides, of the robot 50. The elevator car 10, in this case, comprises four second parts 120 being arranged such as coupling through coupling interfaces 130 between the elevator car 10 and each of the robots 130 may be established. As can be seen, the coupling interface 130 in this case does not necessarily have to be arranged at the position of the first motor portion 16, 56.

Figures 10A and 10B illustrate schematically elevators 100. Figs. 10A and 10B illustrate a designate first motor portion 56 being arranged in parallel with the stator beams 16 of the electric linear motor. In these particular embodiments being illustrated, the robot 50 or robots 50 may be arranged to be moved along the designated first motor portion 56. The first designated first motor portion 56 may be different or similar with respect to the stator beam 16 or beams 16. Fig. 10A illustrates an embodiment of the present invention in which two robots 50 are arranged to be moved along one designated first motor portion 56. The robot 50 is configured such that it may pass or go round the elevator car 10 along the designated stator beam 56. The robot 50 may preferably be arranged such that the first part 110 of the coupling interface 130 does not become in contact with the elevator car 10 when passing the car 10. The first part 110 may be, for example, arranged such as it 110 may be retracted and extended with respect to the robot 50.

Figure 10B illustrates a non-claimed embodiment in which two robots 50 are arranged to be moved along one designated first motor portion 56 and one or more of the stator beams 16. The robot 50 may thus comprise one or several motor portions 51. The motor portion 51 or portions 51 arranged to be moved along the stator beam 16 or beams 16 may be substantially similar to the movers 20 of the electric linear motor.

Although illustrated in Figs. 9A-10B that there is only one elevator car 10 in the elevator shaft 13, it is to be noted that there may be several elevator cars 10 arranged to be moved along the elevator shaft 13. The elevator shaft 13 may further comprise one or several vertical, horizontal and/or inclined portions. Related to embodiments illustrated in Figs. 9A-10B comprising a plurality of movable maintenance robots 50, the elevator control unit 1100 may be configured to control the co-operation of the robots 50 in the maintenance and/or rescue operation related to one elevator car 10. The robots 50 may be configured to provide signals for the elevator control unit 1100, for example, when being coupled with the elevator car 10 and in connection with other tasks. The elevator control unit 1100 may be configured to provide commands to the robots 50 for performing desired tasks.

The specific examples provided in the description given above should not be construed as limiting the applicability and/or the interpretation of the appended claims. Lists and groups of examples provided in the description given above are not exhaustive unless otherwise explicitly stated.

## Claims

1. An elevator (100) comprising:
at least one elevator car (10),
an electric linear motor comprising at least one stator beam (16) arranged in fixed manner with respect to and to extend along an elevator shaft (13) of the elevator (100) for moving the elevator car (10), and
a movable maintenance robot system for providing maintenance and/or rescue operation to an elevator car (10) of the elevator (100), wherein the movable maintenance robot system comprises:
- a coupling interface (130) for coupling a movable maintenance robot (50) of the movable maintenance robot system with the elevator car (10) to provide the maintenance and/or the rescue operation, wherein the coupling interface (130) comprises a first part (110) and a second part (120), wherein the first part (110) is arranged to the movable maintenance robot (50) and configured for coupling with the second part (120), the second part (120) being coupled to the elevator car (10), and
- the movable maintenance robot (50) comprising at least one motor portion (51), wherein the at least one motor portion (51) is configured for moving along at least one first motor portion (56) is arranged in fixed manner with respect to and to extend along the elevator shaft (13),
**characterized in that** the at least one first motor portion (56) is a designated first motor portion and the movable maintenance robot (50) is configured so that it can pass the elevator car (10) along the designated first motor portion.

2. The elevator (100) according to claim 1, wherein the at least one motor portion (51) comprises at least one first motor winding configured to establish an electromagnetic engagement with a corresponding first motor portion (56) for the robot (50) to be moved along the corresponding first motor portion (56).

3. The elevator (100) according to any one of the preceding claims, wherein the movable maintenance robot system is configured to provide maintenance to the elevator car (10) only by at least one of the following: independent operation or remote control.

4. The elevator (100) according to any one of the preceding claims, the movable maintenance robot system being implemented without transportation means for transporting a number of persons.

5. The elevator (100) according to any one of the preceding claims, wherein the coupling interface (130) comprises mechanical coupling means for moving, such as towing or pushing, the elevator car (10) by the robot (50).

6. The elevator (100) according to any one of the preceding claims, wherein the coupling interface (130) comprises electrical coupling means for establishing an electrical connection between the robot (50) and the elevator car (10).

7. The elevator (100) according to any one of the preceding claims, wherein the coupling interface (130) comprises magnetic coupling means, such as comprising permanent magnets or electromagnets, for moving the elevator car (10) by the robot (50).

8. The elevator (100) according to any one of the preceding claims, wherein the electric linear motor comprises a second motor portion (20) configured for moving along one of the at least one stator beam (16), wherein said second motor portion (20) comprises at least one motor winding for establishing an electromagnetic engagement with said stator beam (16), wherein the elevator car (10) comprises a drive unit (12) for energizing the at least one motor winding, and a switch configured to separate the drive unit (12) from the at least one motor winding, wherein the coupling interface (130) comprises a power connector connected or connectable to the at least one motor winding of the second motor portion (20), and
wherein the maintenance robot (50) is configured to supply electrical energy via the power connector to the at least one motor winding upon separation of the at least one motor winding from the drive unit (12).

9. The elevator (100) according to any one of the preceding claims, wherein the maintenance robot (50) comprises a first control unit, and wherein the elevator (100) comprises:
- an elevator control unit (1100);
- a communication connection arranged between the elevator control unit (1100) and the first control unit, wherein the maintenance robot is configured to perform at least one maintenance function based on a control command received from the elevator control unit (1100).

10. The elevator (1100) according to claim 9, comprising:
at least one sensor communicatively connected to the elevator control unit (1100), the at least one sensor configured to provide information of operation of the maintenance robot (50), wherein the elevator control unit (1100) is configured to monitor the operation of the maintenance robot (50) based on the information received from the at least one sensor or to transfer the information further to a remote maintenance server.

11. The elevator (100) according to claim 9 or 10, wherein the maintenance robot (50) is configured to stop operation responsive to a stop signal received from the elevator control unit (1100).

12. The elevator according to any one of preceding claims 6-11, wherein the electrical coupling means are configured to arrange the electrical connection between the robot (50) and at least one motor winding of a second motor portion (20) of the electric linear motor, wherein the second motor portion (20) is coupled to the elevator car (10) and configured for moving along one of the stator beams (16).

13. The elevator according to any one of the preceding claims, comprising at least two movable maintenance robots (50) arranged to be moved along the at least one first motor portion (56).

14. The elevator according to claim 13, wherein the at least two movable maintenance robots (50) are configured to provide maintenance simultaneously to one elevator car (10).

15. A method for providing maintenance and/or rescue operation to an elevator car (10) of an elevator (100), such as by moving the elevator car (10) to a landing floor or a maintenance position or a rescue position, wherein the elevator (100) comprises an electric linear motor comprising at least one stator beam (16) arranged in fixed manner with respect to and to extend along an elevator shaft (13) of the elevator (100),the method comprising
- arranging (81) a movable maintenance robot (50) comprising a motor portion (51) configured to be moved along a first motor portion (56) arranged in fixed manner with respect to and to extend along the elevator shaft (13), and comprising a first part (110) of a coupling interface (130) for coupling with a second part (120) of the coupling interface (130),
- arranging (82) the second part (120) to the elevator car (10),
- coupling (83) the movable maintenance robot (50) to the elevator car (10) by the coupling interface (130), and
- providing (84) maintenance and/or rescue operation to the elevator car (10),
**characterized in that** the first motor portion (56) is a designated first motor portion and the movable maintenance robot (50) is configured so that it can pass the elevator car (10) along the designated first motor portion.

16. The method according to claim 15, wherein the arranging (81) of the robot (50) comprises arranging the robot (50) to be in an electromagnetic engagement with the first motor portion (56) and to be moved along the first motor portion (56), wherein the electromagnetic engagement is arranged via at least one first motor windings of the robot (50).

17. The method according to claim 15 or 16, wherein the coupling (83) comprises arranging a mechanical coupling between the first (110) and the second (120) parts for moving the elevator car (10) by the robot (50).

18. The method according to any one of claims 15-17, wherein the coupling (83) comprises arranging an electrical connection between the robot (50) and the elevator car (10).

19. The method according to claim 18, wherein the electrical connection is arranged between the robot (50) and at least one motor winding of a second motor portion (20) of the electric linear motor, wherein the second motor portion (20) is coupled to the elevator car (10) and configured for moving along one of the at least one stator beam (16).

## Patentansprüche

1. Aufzug (100), aufweisend:
mindestens eine Aufzugskabine (10),
einen elektrischen Linearmotor, der mindestens einen Statorträger (16) aufweist, der in Bezug auf einen Aufzugsschacht (13) des Aufzugs (100) fest angeordnet ist und sich entlang desselben erstreckt, um die Aufzugskabine (10) zu bewegen, und
ein bewegbares Wartungsrobotersystem zur Durchführung eines Wartungs- und/oder Rettungsbetriebs an einer Aufzugskabine (10) des Aufzugs (100), wobei das bewegbare Wartungsrobotersystem aufweist:
- eine Kopplungsschnittstelle (130) zum Koppeln eines bewegbaren Wartungsroboters (50) des bewegbaren Wartungsrobotersystems mit der Aufzugskabine (10) zur Bereitstellung des Wartungs- und/oder des Rettungsbetriebs, wobei die Kopplungsschnittstelle (130) einen ersten Teil (110) und einen zweiten Teil (120) aufweist, wobei der erste Teil (110) an dem bewegbaren Wartungsroboter (50) angeordnet ist und zur Kopplung mit dem zweiten Teil (120) ausgebildet ist, wobei der zweite Teil (120) mit der Aufzugskabine (10) gekoppelt ist, und
- wobei der bewegbare Wartungsroboter (50) mindestens einen Motorabschnitt (51) aufweist, wobei der mindestens eine Motorabschnitt (51) zur Bewegung entlang mindestens eines ersten Motorabschnitts (56) ausgebildet ist, der bezüglich des Aufzugsschachts (13) fest angeordnet ist und sich entlang desselben erstreckt,
**dadurch gekennzeichnet, dass** der mindestens eine erste Motorabschnitt (56) ein bestimmter erster Motorabschnitt ist und der bewegbare Wartungsroboter (50) so ausgebildet ist, dass er die Aufzugskabine (10) entlang des bestimmten ersten Motorabschnitts passieren kann.

2. Aufzug (100) nach Anspruch 1, wobei der mindestens eine Motorabschnitt (51) mindestens eine erste Motorwicklung aufweist, die dazu ausgebildet ist, einen elektromagnetischen Eingriff mit einem entsprechenden ersten Motorabschnitt (56) für den Roboter (50) herzustellen, der entlang des entsprechenden ersten Motorabschnitts (56) bewegt werden soll.

3. Aufzug (100) nach einem der vorhergehenden Ansprüche, wobei das bewegbare Wartungsrobotersystem dazu ausgebildet ist, eine Wartung der Aufzugskabine (10) nur durch mindestens einen der folgenden Schritte durchzuführen: unabhängiger Betrieb oder Fernsteuerung.

4. Aufzug (100) nach einem der vorhergehenden Ansprüche, wobei das bewegbare Wartungsrobotersystem ohne Transportmittel zum Transport einer Anzahl von Personen ausgeführt ist.

5. Aufzug (100) nach einem der vorhergehenden Ansprüche, wobei die Kopplungsschnittstelle (130) mechanische Kopplungsmittel zum Bewegen, beispielsweise Schleppen oder Schieben, der Aufzugskabine (10) durch den Roboter (50) aufweist.

6. Aufzug (100) nach einem der vorhergehenden Ansprüche, wobei die Kopplungsschnittstelle (130) elektrische Kopplungsmittel zum Herstellen einer elektrischen Verbindung zwischen dem Roboter (50) und der Aufzugskabine (10) aufweist.

7. Aufzug (100) nach einem der vorhergehenden Ansprüche, wobei die Kopplungsschnittstelle (130) magnetische Kopplungsmittel aufweist, beispielsweise Permanentmagnete oder Elektromagnete aufweist, zur Bewegung der Aufzugskabine (10) durch den Roboter (50).

8. Aufzug (100) nach einem der vorhergehenden Ansprüche, wobei der elektrische Linearmotor einen zweiten Motorabschnitt (20) aufweist, der zur Bewegung entlang eines des mindestens einen Statorträgers (16) ausgebildet ist, wobei der zweite Motorabschnitt (20) mindestens eine Motorwicklung zum Herstellen eines elektromagnetischen Eingriffs mit dem Statorträger (16) aufweist, wobei die Aufzugskabine (10) eine Antriebseinheit (12) zum Bestromen der mindestens einen Motorwicklung und einen Schalter, der dazu ausgebildet ist, die Antriebseinheit (12) von der mindestens einen Motorwicklung zu trennen, aufweist, wobei die Kopplungsschnittstelle (130) einen Leistungsstecker aufweist, der mit der mindestens einen Motorwicklung des zweiten Motorabschnitts (20) verbunden ist oder verbindbar ist, und
wobei der Wartungsroboter (50) dazu ausgebildet ist, bei Trennung der mindestens einen Motorwicklung von der Antriebseinheit (12) elektrische Energie über den Stromanschluss an die mindestens eine Motorwicklung zu liefern.

9. Aufzug (100) nach einem der vorhergehenden Ansprüche, wobei der Wartungsroboter (50) eine erste Steuereinheit aufweist, und wobei der Aufzug (100) aufweist:
- eine Aufzugssteuereinheit (1100);
- eine zwischen der Aufzugssteuereinheit (1100) und der ersten Steuereinheit angeordnete Kommunikationsverbindung, wobei der Wartungsroboter dazu ausgebildet ist, basierend auf einem von der Aufzugssteuereinheit (1100) empfangenen Steuerbefehl mindestens eine Wartungsfunktion auszuführen.

10. Aufzug (1100) nach Anspruch 9, aufweisend:
mindestens einen Sensor, der kommunikativ mit der Aufzugssteuereinheit (1100) verbunden ist, wobei der mindestens eine Sensor dazu ausgebildet ist, Informationen über den Betrieb des Wartungsroboters (50) bereitzustellen, wobei die Aufzugssteuereinheit (1100) dazu ausgebildet ist, den Betrieb des Wartungsroboters (50) basierend auf den von dem mindestens einen Sensor erhaltenen Informationen zu überwachen oder die Informationen weiter an einen Fernwartungsserver zu übertragen.

11. Aufzug (100) nach Anspruch 9 oder 10, wobei der Wartungsroboter (50) dazu ausgebildet ist, den Betrieb als Reaktion auf ein von der Aufzugssteuereinheit (1100) empfangenes Stoppsignal zu stoppen.

12. Aufzug nach einem der vorhergehenden Ansprüche 6-11, wobei die elektrischen Kopplungsmittel dazu ausgebildet sind, die elektrische Verbindung zwischen dem Roboter (50) und mindestens einer Motorwicklung eines zweiten Motorabschnitts (20) des elektrischen Linearmotors herzustellen, wobei der zweite Motorabschnitt (20) mit der Aufzugskabine (10) gekoppelt ist und zur Bewegung entlang eines der Statorträger (16) ausgebildet ist.

13. Aufzug nach einem der vorhergehenden Ansprüche, aufweisend mindestens zwei bewegbare Wartungsroboter (50), die dazu angeordnet sind, entlang des mindestens einen ersten Motorabschnitts (56) bewegt zu werden.

14. Aufzug nach Anspruch 13, wobei die mindestens zwei bewegbaren Wartungsroboter (50) dazu ausgebildet sind, gleichzeitig Wartung an einer Aufzugskabine (10) durchführen.

15. Verfahren zur Bereitstellung eines Wartungs-und/oder Rettungsbetriebs an einer Aufzugskabine (10) eines Aufzugs (100), beispielsweise durch Bewegen der Aufzugskabine (10) zu einem Stockwerk oder einer Wartungsposition oder einer Rettungsposition, wobei der Aufzug (100) einen elektrischen Linearmotor aufweist, der mindestens einen Statorträger (16) aufweist, der in Bezug auf einen Aufzugsschacht (13) des Aufzugs (100) fest angeordnet ist und sich entlang desselben erstreckt, wobei das Verfahren aufweist:
- Anordnen (81) eines bewegbaren Wartungsroboters (50), der einen Motorabschnitt (51) aufweist, der dazu ausgebildet ist, entlang eines ersten Motorabschnitts (56) bewegt zu werden, der in Bezug auf den Aufzugsschacht (13) fest angeordnet ist und sich entlang desselben erstreckt, und der einen ersten Teil (110) einer Kopplungsschnittstelle (130) zur Kopplung mit einem zweiten Teil (120) der Kopplungsschnittstelle (130) aufweist,
- Anordnen (82) des zweiten Teils (120) an der Aufzugskabine (10),
- Koppeln (83) des bewegbaren Wartungsroboters (50) an die Aufzugskabine (10) durch die Kopplungsschnittstelle (130), und
- Bereitstellen (84) eines Wartungs- und/oder Rettungsbetriebs an der Aufzugskabine (10),
**dadurch gekennzeichnet, dass** der erste Motorabschnitt (56) ein bestimmter erster Motorabschnitt ist und der bewegbare Wartungsroboter (50) so ausgebildet ist, dass die Aufzugskabine (10) entlang des bestimmten ersten Motorabschnitts passieren kann.

16. Verfahren nach Anspruch 15, wobei das Anordnen (81) des Roboters (50) Anordnen des Roboters (50), so dass er in elektromagnetischem Eingriff mit dem ersten Motorabschnitt (56) steht und entlang des ersten Motorabschnitts (56) bewegt wird, aufweist, wobei der elektromagnetische Eingriff über mindestens eine erste Motorwicklung des Roboters (50) erfolgt.

17. Verfahren nach Anspruch 15 oder 16, wobei die Kopplung (83) Anordnen einer mechanischen Kopplung zwischen dem ersten (110) und dem zweiten (120) Teil zur Bewegung der Aufzugskabine (10) durch den Roboter (50) aufweist.

18. Verfahren nach einem der Ansprüche 15-17, wobei die Kopplung (83) Anordnen einer elektrischen Verbindung zwischen dem Roboter (50) und der Aufzugskabine (10) aufweist.

19. Verfahren nach Anspruch 18, wobei die elektrische Verbindung zwischen dem Roboter (50) und mindestens einer Motorwicklung eines zweiten Motorabschnitts (20) des elektrischen Linearmotors angeordnet wird, wobei der zweite Motorabschnitt (20) mit der Aufzugskabine (10) gekoppelt ist und zur Bewegung entlang eines des mindestens einen Statorträgers (16) ausgebildet ist.

## Revendications

1. Ascenseur (100) comprenant :
au moins une cabine d'ascenseur (10),
un moteur linéaire électrique comprenant au moins une poutre de stator (16) disposée de manière fixe par rapport à une cage d'ascenseur (13) de l'ascenseur (100) et pour s'étendre le long de celle-ci pour déplacer la cabine d'ascenseur (10), et
un système de robot de maintenance mobile pour assurer une opération de maintenance et/ou de sauvetage d'une cabine d'ascenseur (10) de l'ascenseur (100), dans lequel le système de robot de maintenance mobile comprend :
- une interface d'accouplement (130) pour accoupler un robot de maintenance mobile (50) du système de robot de maintenance mobile avec la cabine d'ascenseur (10) pour assurer l'opération de maintenance et/ou de sauvetage, dans lequel l'interface d'accouplement (130) comprend une première partie (110) et une seconde partie (120), dans lequel la première partie (110) est disposée contre le robot de maintenance mobile (50) et configurée pour être accouplée avec la seconde partie (120), la seconde partie (120) étant accouplée avec la cabine d'ascenseur (10), et
- le robot de maintenance mobile (50) comprenant au moins une partie motrice (51), dans lequel l'au moins une partie motrice (51) est configurée pour se déplacer le long d'au moins une première partie motrice (56) disposée de manière fixe par rapport à la cage d'ascenseur (13) et pour s'étendre le long de celle-ci,
**caractérisé en ce que** l'au moins une première partie motrice (56) est une première partie motrice désignée et le robot de maintenance mobile (50) est configuré de manière à pouvoir faire passer la cabine d'ascenseur (10) le long de la première partie motrice désignée.

2. Ascenseur (100) selon la revendication 1, dans lequel l'au moins une partie motrice (51) comprend au moins un premier enroulement moteur configuré pour établir une mise en prise électromagnétique avec une première partie motrice correspondante (56) afin de déplacer le robot (50) le long de la première partie motrice correspondante (56).

3. Ascenseur (100) selon l'une quelconque des revendications précédentes, dans lequel le système de robot de maintenance mobile est configuré pour assurer la maintenance de la cabine d'ascenseur (10) uniquement par au moins : un fonctionnement indépendant ou une commande à distance.

4. Ascenseur (100) selon l'une quelconque des revendications précédentes, le système de robot de maintenance mobile étant mis en œuvre sans moyen de transport pour le transport d'un nombre de personnes.

5. Ascenseur (100) selon l'une quelconque des revendications précédentes, dans lequel l'interface d'accouplement (130) comprend des moyens d'accouplement mécaniques pour le déplacement, comme par remorquage ou poussée, de la cabine d'ascenseur (10) par le robot (50).

6. Ascenseur (100) selon l'une quelconque des revendications précédentes, dans lequel l'interface d'accouplement (130) comprend des moyens d'accouplement électriques pour établir une connexion électrique entre le robot (50) et la cabine d'ascenseur (10).

7. Ascenseur (100) selon l'une quelconque des revendications précédentes, dans lequel l'interface d'accouplement (130) comprend des moyens d'accouplement magnétiques, tels que des aimants permanents ou des électroaimants, pour le déplacement de la cabine d'ascenseur (10) par le robot (50).

8. Ascenseur (100) selon l'une quelconque des revendications précédentes, dans lequel le moteur linéaire électrique comprend une seconde partie motrice (20) configurée pour se déplacer le long de l'une de l'au moins une poutre de stator (16), dans lequel ladite seconde partie motrice (20) comprend au moins un enroulement moteur pour établir une mise en prise électromagnétique avec ladite poutre de stator (16), dans lequel la cabine d'ascenseur (10) comprend une unité d'entraînement (12) pour exciter l'au moins un enroulement moteur, et un commutateur configuré pour séparer l'unité d'entraînement (12) de l'au moins un enroulement moteur, dans lequel l'interface d'accouplement (130) comprend un connecteur d'alimentation connecté ou connectable à l'au moins un enroulement moteur de la seconde partie motrice (20), et dans lequel le robot de maintenance (50) est configuré pour fournir de l'énergie électrique via le connecteur d'alimentation à l'au moins un enroulement moteur lors de la séparation de l'au moins un enroulement moteur d'avec l'unité d'entraînement (12).

9. Ascenseur (100) selon l'une quelconque des revendications précédentes, dans lequel le robot de maintenance (50) comprend une première unité de commande, et dans lequel l'ascenseur (100) comprend :
- une unité de commande d'ascenseur (1100) ;
- une connexion de communication établie entre l'unité de commande d'ascenseur (1100) et la première unité de commande, dans lequel le robot de maintenance est configuré pour réaliser au moins une fonction de maintenance sur la base d'une instruction de commande reçue à partir de l'unité de commande d'ascenseur (1100).

10. Ascenseur (1100) selon la revendication 9, comprenant :
au moins un capteur connecté de manière à communiquer avec l'unité de commande d'ascenseur (1100), l'au moins un capteur étant configuré pour fournir des informations de fonctionnement du robot de maintenance (50), dans lequel l'unité de commande d'ascenseur (1100) est configurée pour surveiller le fonctionnement du robot de maintenance (50) en fonction des informations reçues à partir de l'au moins un capteur ou transférer les informations plus loin à un serveur de maintenance à distance.

11. Ascenseur (100) selon la revendication 9 ou 10, dans lequel le robot de maintenance (50) est configuré pour arrêter le fonctionnement en réponse à un signal d'arrêt reçu à partir de l'unité de commande d'ascenseur (1100).

12. Ascenseur selon l'une quelconque des revendications précédentes 6 à 11, dans lequel les moyens d'accouplement électriques sont configurés pour établir la connexion électrique entre le robot (50) et au moins un enroulement moteur d'une seconde partie motrice (20) du moteur linéaire électrique, dans lequel la seconde partie motrice (20) est accouplée avec la cabine d'ascenseur (10) et configurée pour se déplacer le long d'une des poutres de stator (16).

13. Ascenseur selon l'une quelconque des revendications précédentes, comprenant au moins deux robots de maintenance mobiles (50) disposés de manière à être déplacés le long de l'au moins une première partie motrice (56).

14. Ascenseur selon la revendication 13, dans lequel les au moins deux robots de maintenance mobiles (50) sont configurés pour assurer simultanément la maintenance d'une cabine d'ascenseur (10).

15. Procédé pour assurer une opération de maintenance et/ou de sauvetage d'une cabine d'ascenseur (10) d'un ascenseur (100), comme par déplacement de la cabine d'ascenseur (10) jusqu'à un étage palier ou une position de maintenance ou une position de sauvetage, dans lequel l'ascenseur (100) comprend un moteur linéaire électrique comprenant au moins une poutre de stator (16) disposée de manière fixe par rapport à une cage d'ascenseur (13) de l'ascenseur (100) et pour s'étendre le long de celle-ci, le procédé comprenant
- l'agencement (81) d'un robot de maintenance mobile (50) comprenant une partie motrice (51) configurée pour être déplacée le long d'une première partie motrice (56) agencée de manière fixe par rapport à la cage d'ascenseur (13) et pour s'étendre le long de celle-ci, et comprenant une première partie (110) d'une interface d'accouplement (130) pour l'accouplement avec une seconde partie (120) de l'interface d'accouplement (130),
- l'agencement (82) de la seconde partie (120) contre la cabine d'ascenseur (10),
- l'accouplement (83) du robot de maintenance mobile (50) avec la cabine d'ascenseur (10) par l'interface d'accouplement (130), et
- la prestation (84) de l'opération de maintenance et/ou de sauvetage de la cabine d'ascenseur (10),
**caractérisé en ce que** la première partie motrice (56) est une première partie motrice désignée et le robot de maintenance mobile (50) est configuré de manière à pouvoir faire passer la cabine d'ascenseur (10) le long de la première partie motrice désignée.

16. Procédé selon la revendication 15, dans lequel l'agencement (81) du robot (50) comprend l'agencement du robot (50) pour qu'il soit en prise électromagnétique avec la première partie motrice (56) et qu'il soit déplacé le long de la première partie motrice (56), dans lequel la mise en prise électromagnétique est établie par au moins un premier enroulement moteur du robot (50).

17. Procédé selon la revendication 15 ou 16, dans lequel l'accouplement (83) comprend l'établissement d'un accouplement mécanique entre les première (110) et seconde (120) parties pour le déplacement de la cabine d'ascenseur (10) par le robot (50).

18. Procédé selon l'une quelconque des revendications 15 à 17, dans lequel l'accouplement (83) comprend l'établissement d'une connexion électrique entre le robot (50) et la cabine d'ascenseur (10).

19. Procédé selon la revendication 18, dans lequel la connexion électrique est établie entre le robot (50) et au moins un enroulement moteur d'une seconde partie motrice (20) du moteur linéaire électrique, dans lequel la seconde partie motrice (20) est accouplée avec la cabine d'ascenseur (10) et configurée pour se déplacer le long d'une de l'au moins une poutre de stator (16).
